(19) **Europäisches Patentamt / European Patent Office / Office européen des brevets**

(11) **EP 3 545 711 B1**

(12) **FASCICULE DE BREVET EUROPEEN**

(45) Date de publication et mention de la délivrance du brevet:
**09.08.2023 Bulletin 2023/32**

(21) Numéro de dépôt: **17803916.0**

(22) Date de dépôt: **22.11.2017**

(51) Classification Internationale des Brevets (IPC):
**H04W 48/18** *(2009.01)* **H04W 8/18** *(2009.01)*

(52) Classification Coopérative des Brevets (CPC):
**H04W 48/18; H04W 8/18**

(86) Numéro de dépôt international:
**PCT/EP2017/080011**

(87) Numéro de publication internationale:
**WO 2018/095954 (31.05.2018 Gazette 2018/22)**

(54) **SÉLECTION D'UNE INFRASTRUCTURE DE TÉLÉCOMMUNICATION**

AUSWAHL EINER TELEKOMMUNIKATIONSINFRASTRUKTUR

SELECTION OF A TELECOMMUNICATION INFRASTRUCTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.11.2016 FR 1601653**

(43) Date de publication de la demande:
**02.10.2019 Bulletin 2019/40**

(73) Titulaire: **Thales**
**92400 Courbevoie (FR)**

(72) Inventeur: **BITTARD, Anne**
**92622 Gennevilliers (FR)**

(74) Mandataire: **Lavoix**
**2, place d'Estienne d'Orves**
**75441 Paris Cedex 09 (FR)**

(56) Documents cités:
WO-A2-2008/045797 US-A1- 2004 162 058
US-A1- 2010 017 861 US-A1- 2012 166 622

**Description**

La présente invention concerne un procédé de gestion des accès à une infrastructure de télécommunication. L'invention se rapporte également à un produit programme d'ordinateur et à une infrastructure de télécommunication associés.

Pour l'ensemble des sigles dans la description qui suit, le lecteur est invité à se reporter à la partie LEXIQUE.

Pour accéder à des services de téléphonie mobile, tels des appels mobiles, l'échange de messages ou l'accès à Internet, un utilisateur utilise une station mobile dans laquelle est installé un dispositif d'attachement, comprenant généralement une carte SIM fournie par le MNO de l'utilisateur, pour accéder au réseau dudit MNO.

Toutefois, il existe des situations dans lesquelles l'utilisation de certains services de téléphonie mobile est dégradée, voire impossible. L'utilisateur n'est, par exemple, plus en mesure d'accéder à Internet, ou ne dispose pas d'un débit suffisant pour réaliser une visioconférence.

De telles situations résultent souvent de la perte ou de la dégradation de la couverture radio du réseau du MNO causée, par exemple, par un défaut technique dudit réseau, ou par un maillage territorial incomplet de la couverture radio dudit MNO.

La problématique de la perte d'accès radio ou de la dégradation de l'accès à des services mobiles est particulièrement dérangeante lorsque les utilisateurs sont, par exemple, des agents de forces de sécurité, des policiers, des pompiers, ou des utilisateurs d'équipements critiques. De tels utilisateurs, par leurs fonctions, ont le besoin de disposer de services mobiles présentant une bonne résilience, c'est-à-dire présentant la capacité de continuer à fonctionner en cas de dégradation ou de panne.

Il est également connu des systèmes ou des procédés des documents US 2012/166622 A1, US 2010/017861 A1, US 2004/162058 A1 et WO 2008/045797 A2.

Il existe donc un besoin de disposer d'une solution permettant d'améliorer la résilience des services mobiles.

A cet effet, il est proposé un procédé de gestion des accès à une infrastructure de télécommunication selon la revendication 1.

Il est également proposé un produit programme d'ordinateur selon la revendication 2.

Il est, en outre, proposé une infrastructure de communication selon la revendication 3.

D'autres caractéristiques et avantages de l'invention apparaîtront à la lecture de la description qui suit de modes de réalisation de l'invention, donnée à titre d'exemple uniquement et en référence aux dessins qui sont :

- figure 1, une représentation schématique d'une infrastructure de télécommunication ;
- figure 2, une station mobile faisant partie de l'infrastructure de la figure 1, et

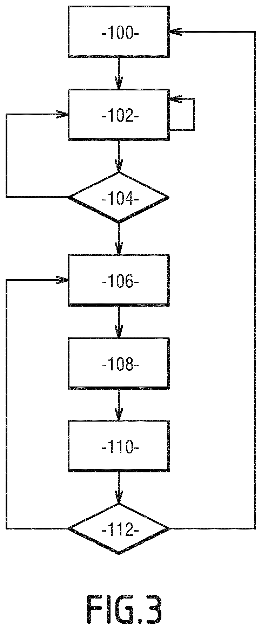

- figure 3, un logigramme illustrant un exemple de mise en oeuvre d'un procédé de gestion des accès à l'infrastructure de la figure 1.

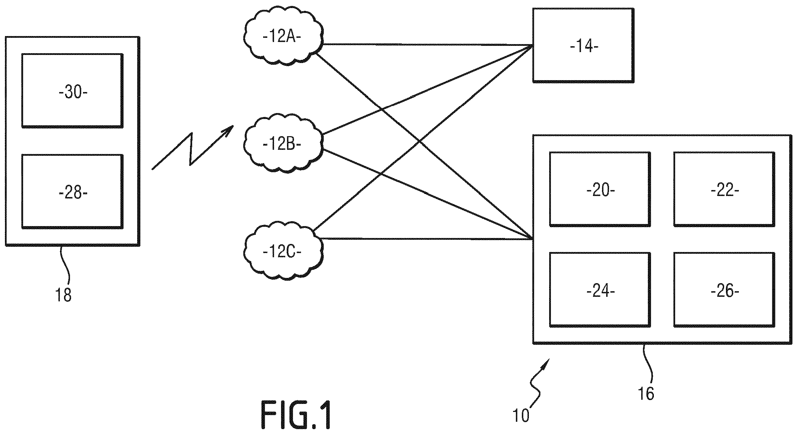

En référence à la figure 1, il est décrit un exemple avec un identifiant IMSI unique, sachant qu'en variante, des exemples avec plusieurs identifiants IMSI sont envisageables. Dans la suite, l'exemple à un identifiant unique est désigné par l'expression « présent exemple » ou « présent mode de réalisation ».

Dans le mode de réalisation avec un identifiant IMSI unique, l'équipement de contrôle d'accès 14 est unique alors que, dans le cas où plusieurs identifiants mobiles sont utilisés, plusieurs équipements de contrôle d'accès sont utilisés.

La figure 1 représente une infrastructure 10 de télécommunication comprenant au moins deux réseaux 12 de télécommunication, un équipement de contrôle d'accès 14, un dispositif de gestion 16 et des stations mobiles 18.

Un réseau 12 est propre à mettre en oeuvre des communications avec des stations mobiles 18 selon différents protocoles de télécommunication.

Les réseaux 12 appartiennent à des MNO qui sont tous différents entre eux.

Dans le cas de la figure 1, l'infrastructure 10 comprend un premier réseau $12_A$, un deuxième réseau $12_B$ et un troisième réseau $12_C$ appartenant respectivement à trois MNO nationaux distincts entre eux, notés $MNO_A$, $MNO_B$ et $MNO_C$.

Chaque réseau 12 est, par exemple, propre à mettre en oeuvre des protocoles de télécommunication du type 2G, 3G, 4G et suivants.

Chaque réseau 12 est relié à l'équipement de contrôle d'accès 14 qui est propre à gérer l'authentification et le contrôle d'accès de la station mobile 18 aux réseaux 12 pour la mise en oeuvre de services mobiles.

L'équipement de contrôle d'accès 14, également désigné par le sigle HSS, comprend une base de données.

Dans le présent mode de réalisation, le HSS 14 est celui d'un MVNE.

Le HSS 14 est propre à mémoriser, pour chaque utilisateur muni d'une station mobile 18, un registre de réseaux autorisés comprenant des réseaux.

Par « réseau autorisé », il est entendu un réseau auquel la station mobile 18 est en mesure de s'attacher à partir d'un IMSI déterminé. Dit autrement, un réseau autorisé désigne un réseau sur lequel la station mobile 18 est susceptible d'être enregistrée avec un IMSI pour pouvoir s'y attacher.

Dans le présent mode de réalisation, les réseaux du registre de réseaux autorisés sont tous associés à un même IMSI. En d'autres termes, l'IMSI utilisé par la station mobile 18 pour s'attacher aux différents réseaux du registre de réseaux autorisés est toujours le même.

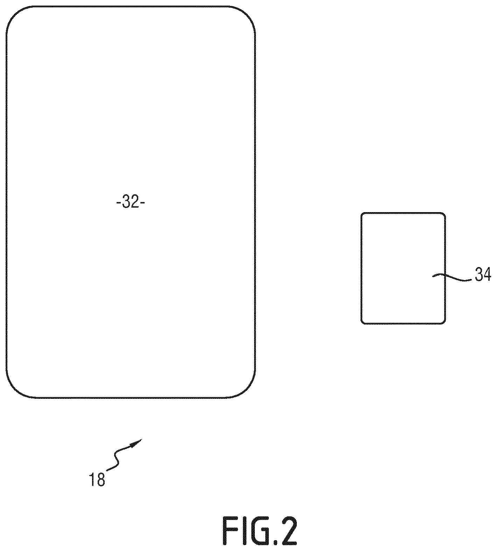

Dans l'exemple des figures 1 et 2, le registre de réseaux autorisés contient le premier réseau $12_A$, le deuxième réseau $12_B$ et le troisième réseau $12_c$ qui sont tous associés au même IMSI, noté $IMSI_1$. Chaque utilisateur d'une station mobile 18 est alors autorisé à être enregistré sur le premier réseau $12_A$, le deuxième réseau $12_B$ ou le troisième réseau $12_C$ avec le même IMSI, noté $IMSI_1$.

Une telle situation est généralement désignée par l'expression « profil d'abonné multi-opérateur ».

Dans d'autres modes de réalisation, d'autres HSS sont présents et correspondent, par exemple, à des équipements de MNO nationaux ou étrangers. Les autres HSS contiennent d'autres IMSI correspondant à des utilisateurs de stations mobiles 18 pour attachement sur les réseaux desdits MNO étrangers ou pour attachement à un MNO national en mode « roaming » national ou international. Le registre de réseaux autorisés contient alors différents IMSI.

Par exemple, un unique IMSI correspond à plusieurs MNO nationaux tandis que d'autres IMSI correspondent à des MNO étrangers.

Alternativement, le registre de réseaux autorisés contient, pour chaque utilisateur muni d'une station mobile 18, un IMSI associé à deux réseaux $12_A$, $12_B$ et un autre numéro d'identification mobile IMSI associé à l'autre réseau $12_C$.

De telles configurations présentent notamment comme avantage de pouvoir mettre en oeuvre au mieux les procédures d'itinérance nationale ou internationale prévues par les normes de télécommunication. Une telle mise en oeuvre tient compte des besoins de mobilité liés au service du MVNO et des conditions techniques et commerciales d'accès aux réseaux supportés.

A titre d'illustration, dans de telles configurations, la station mobile 18 dispose d'un unique $IMSI_1$ pour accéder aux réseaux appartenant à différents MNO nationaux figurant dans le registre de réseaux autorisés, et d'autres IMSI pour accéder, via les procédures d'itinérance, à d'autres réseaux appartenant à des MNO nationaux ou étrangers figurant également dans le registre de réseaux autorisés.Dans le présent mode de réalisation, le dispositif de gestion 16 appartient à un MVNO ayant souscrit aux services du MVNE, et comprend un système d'information 20, un serveur de configuration 22, un serveur de téléchargement 24 et un serveur de connaissances 26.

Le système d'information 20 permet au MVNO de gérer les services mobiles proposés, en permettant notamment la configuration du ou des IMSI et des différents réseaux 12 sur lesquels sont autorisés les utilisateurs munis de stations mobiles 18, notamment au niveau de l'équipement de contrôle d'accès 14 et du serveur de configuration 22.

Le serveur de configuration 22 permet au MVNO de gérer, en fonction du profil de services souscrits par l'utilisateur qui a été mémorisé dans le système d'information 20, la souscription technique au service de gestion des accès aux réseaux 12 ainsi que les principaux paramètres associés audit profil de services.

Le serveur de téléchargement 24 permet au MVNO et/ou à l'utilisateur de procéder au téléchargement d'un ensemble d'instructions logicielles et de leurs mises à jour permettant de mettre en oeuvre un procédé de gestion des accès.

Le serveur de connaissances 26 permet au MVNO de récupérer des données liées au fonctionnement d'un procédé de gestion des accès. Comme décrit par la suite, le serveur de connaissances 26 permet également de mémoriser et d'exploiter des données complémentaires aux données de paramétrage fournies par le serveur de configuration 22 qui correspondent à certains critères de décision, telle l'utilisation de données géographiques ou de préférences réseaux.

Les serveurs 22 et 24 sont accessibles au terminal mobile 18 en lecture, et le serveur 26 est accessible au terminal mobile 18 en lecture et en écriture.

Les stations mobiles 18 sont propres à mettre en oeuvre des télécommunications avec les réseaux 12.

L'expression « station mobile », qui se rapporte à la norme GSM, est utilisée de façon équivalente à l'expression « équipement utilisateur », qui se rapporte notamment aux normes UMTS et LTE.

Chaque station mobile 18 comprend un module d'attachement 28, et un module de décision 30 distinct du module d'attachement 28.

Le module d'attachement 28 et le module de décision 30 contiennent chacun des instructions logicielles qui, une fois exécutées par un ou plusieurs processeurs, mettent chacun en oeuvre au moins certaines étapes d'un procédé de gestion des accès à l'infrastructure 10.

Le module d'attachement 28 est propre à déclencher la mise en oeuvre d'une étape d'initiation d'un attachement de la station mobile 18 à un réseau 12 au moyen d'un numéro d'identification mobile.

Le module d'attachement 28 est propre à déclencher la mise en oeuvre d'une étape d'initiation d'un attachement de la station mobile 18 à un réseau 12, le réseau 12 étant spécifié par le module de décision 30 et étant compatible avec le profil d'abonné mémorisé dans le serveur de contrôle d'accès 14, également compatible avec le registre de réseaux autorisés mémorisé dans le HSS 14.

Dans le présent mode de réalisation, le numéro d'identification mobile est un IMSI. Dans ce qui suit, le numéro d'identification mobile est désigné par le sigle IMSI.

Par « attachement », il est fait référence aux procédures décrites par les normes de télécommunication et qui consistent à identifier puis à authentifier une station mobile au sein d'un réseau.

Le module de décision 30 est propre à mémoriser un registre de réseaux autorisés.

Dans le présent mode de réalisation, le registre de réseaux autorisés mémorisé dans le module de décision 30 correspond au registre de réseaux autorisés mémorisé dans le ou les HSS 14. En d'autres termes, les réseaux autorisés au niveau du ou des HSS 14 sont les mêmes que les réseaux autorisés au niveau du module de décision 30.

Dans d'autres modes de réalisation, le registre de réseaux autorisés mémorisé dans le module de décision 30 est moins étendu que le registre de réseaux autorisés mémorisé dans le HSS 14, c'est-à-dire qu'il contient moins de réseaux autorisés. Une telle situation résulte, par exemple, d'un paramétrage du module de décision 30 consistant à interdire à la station mobile 18 l'accès à un ou plusieurs réseaux figurant dans le registre de réseaux autorisés mémorisé dans le HSS 14.

Dans d'autres modes de réalisation, le registre de réseaux autorisés mémorisé dans le module de décision 30 est plus étendu que le registre de réseaux autorisés mémorisé contenus dans le HSS 14, c'est-à-dire qu'il contient plus de réseaux autorisés. Une telle situation résulte, par exemple, d'un paramétrage du module de décision 30 consistant à autoriser la station mobile 18 à accéder à des réseaux de type WIFI, qui ne sont pas listés dans le registre de réseaux autorisés mémorisé dans le HSS 14.

La station mobile 18 ayant réussi ou non à s'attacher à un réseau 12, dit réseau courant, le module de décision 30 est propre à mettre en oeuvre une étape de prise de décision.

L'étape de prise de décision, mise en oeuvre par le module de décision 30, consiste à fournir au module d'attachement 28, sur la base d'au moins un critère choisi parmi une liste d'au moins deux critères distincts entre eux, un critère de la liste étant l'existence d'une couverture réseau, un message de bascule pour le déclenchement de la mise en oeuvre de l'étape d'initiation d'un attachement vers un réseau cible, distinct du réseau courant.

Dans l'étape de prise de décision, le réseau cible est choisi parmi les réseaux du registre de réseaux autorisés mémorisé dans le module de décision 30.

La figure 2 illustre un exemple de station mobile 18 de l'infrastructure 10 de la figure 1.

Dans l'exemple de la figure 2, la station mobile 18 est un téléphone portable qui comprend un équipement terminal mobile 32 et un dispositif d'attachement 34 propre à être installé dans l'équipement terminal mobile 32.

La définition de l'expression « équipement mobile » correspond à la définition donnée par les normes de télécommunication de type 2G, 3G, 4G et suivantes.

De fait, l'équipement terminal mobile 32 est notamment propre à gérer les ressources radio, l'établissement des connexions ainsi que des services d'itinérance et comprend un émetteur-récepteur pour la liaison radio avec des stations de base 2G, 3G, 4G et suivantes, et éventuellement à d'autres réseaux radio comme le WIFI, un processeur, une mémoire et un système d'exploitation.

Le système d'exploitation de l'équipement terminal mobile 32 est, par exemple, de type Android.

Dans le présent mode de réalisation, le dispositif d'attachement 34 est une carte SIM 34.

La carte SIM 34 est propre à gérer des réseaux autorisés, c'est-à-dire des réseaux figurant dans le registre de réseaux autorisés mémorisé dans le HSS 14 et/ou dans le module de décision 30.

La carte SIM 34 est une puce qui comprend un microcontrôleur et une mémoire, et qui est propre à mémoriser des informations spécifiques à un utilisateur utilisées pour la mise en oeuvre de l'initiation d'un attachement à un réseau 12.

De façon non limitative, le dispositif d'attachement 34 est propre à mémoriser au moins un IMSI et un ensemble d'informations propres à prouver l'authenticité de l'IMSI.

Dans le mode de réalisation des figures 1 et 2, le module de décision 30 est mémorisé dans une mémoire de l'équipement terminal mobile 32 et le module d'attachement 28 est mémorisé dans une mémoire du dispositif d'attachement 34. De fait, les instructions logicielles du module de décision 30 sont exécutées par le processeur de l'équipement terminal mobile 32, et les instructions logicielles du module d'attachement 28 sont exécutées par le microcontrôleur du dispositif d'attachement 34 sur la base d'instructions émises par le module de décision 30.

Dans ce cas, le module de décision 30 est, par exemple, une application mobile propre à être installée sur un équipement mobile avec un système d'exploitation, par exemple de type Android.

Un premier exemple de mise en oeuvre, au sein de l'infrastructure 10 des figures 1 et 2, du procédé de gestion des accès à une infrastructure de télécommunication est à présent décrit.

Il est considéré que des étapes de paramétrage des équipements et bases de données, notamment du ou des HSS 14, du système d'information 20, du serveur de configuration 22, du module de décision 30 et du module d'attachement 28, ont été préalablement mises en oeuvre pour aboutir à l'infrastructure 10 des figures 1 et 2.

Le procédé comprend un ensemble d'étapes 100 à 112, l'étape 100 étant mise en oeuvre par l'équipement terminal mobile 32, les étapes 102 à 106 et 112 étant mises en oeuvre par le module de décision 30 et les étapes 108 et 110 étant déclenchées par le module d'attachement 28 et mises en oeuvre par l'équipement terminal mobile 32.

Initialement, dans une étape initiale 100, la station mobile 18 est attachée au premier réseau $12_A$, dit réseau courant $12_A$, à partir de l'$IMSI_1$ associé dans le dispositif d'attachement 34 au premier réseau $12_A$.

En variante, dans l'étape initiale 100, la station mobile 18 n'a pas réussi à s'attacher au premier réseau

$12_A$. Une telle situation résulte, par exemple, d'un niveau de signal insuffisant pour que les différentes étapes d'un attachement puissent toutes être mises en oeuvre avec succès.

Dans une étape 102, le module de décision 30 effectue des mesures périodiques.

Le module de décision 30 mesure périodiquement que le débit data est supérieur à un seuil, par exemple fixé à 10 kbit/s.

Par l'expression « data », il est indifféremment fait référence à l'expression « données » ou « données mobiles » ou encore « débit en données mobiles » pour désigner le service de transmission de données en mode paquet entre un équipement terminal mobile et un serveur via le réseau mobile.

Puis, le module de décision 30 mesure qu'à un instant, noté T, le débit en data est devenu inférieur au seuil de 10 kbits/s.

Une étape de test 104 est alors mise en oeuvre.

Dans l'étape de test 104, le module de décision 30 détermine si le débit en data est inférieur à 10 kbits/s pendant une durée au moins égale à $T + \Delta$, où $\Delta$ vaut, par exemple, 1 minute.

Si le débit en data dépasse 10 kbit/s avant l'instant $T + \Delta$, l'étape initiale 102 est à nouveau mise en oeuvre.

Dans ce cas, aucun changement de réseau n'est mis en oeuvre puisque le débit en data n'a pas été inférieur au seuil de 10 kbis/s pendant une durée suffisamment longue.

A l'inverse, si le débit en data est inférieur à 10 kbits/s pendant une durée au moins égale à $T + \Delta$, alors une étape de prise de décision 106 est mise en oeuvre.

L'étape de prise de décision 106 comprend la transmission, depuis le module de décision 30 vers le module d'attachement 28, d'un message de bascule du réseau courant $12_A$ vers un réseau cible $12_B$ déterminé par le module de décision 30 et choisi dans le registre de réseaux autorisés mémorisé dans le module de décision 30.

Cela signifie que l'étape de prise de décision 106 se termine par la transmission, depuis le module de décision 30 vers le module d'attachement 28, d'un message de bascule du réseau courant $12_A$ vers un réseau cible $12_B$ déterminé par le module de décision 30 et choisi dans le registre de réseaux autorisés mémorisé dans le module de décision 30.

A la réception du message de bascule, le dispositif d'attachement 34, à travers le module d'attachement 28, déclenche la mise en oeuvre d'une initiation d'un attachement au réseau cible $12_B$.

En particulier, le dispositif d'attachement 34 met en oeuvre un ensemble d'actions internes au dispositif d'attachement 34 nécessaires à l'aboutissement de l'attachement au réseau cible $12_B$. L'ensemble d'actions interne est bien connu de l'homme du métier dans le cadre d'une procédure d'attachement à un autre réseau et n'est pas décrit plus en détails.

Ensuite, le dispositif d'attachement 34 transmet à l'équipement terminal mobile 32 un message de resélection de réseau pour le réseau cible $12_B$, également bien connu de l'homme du métier.

Enfin, à la réception du message de resélection de réseau pour le réseau cible $12_B$, l'équipement terminal mobile 32 met successivement en oeuvre une étape de détachement 108 et une étape d'initiation d'un attachement 110.

Dans l'étape de détachement 108, l'équipement terminal mobile 32 met en oeuvre un détachement du réseau courant $12_A$.

Dans l'étape d'initiation d'un attachement 110, l'équipement terminal mobile 32 met en oeuvre un attachement au réseau cible $12_B$, à partir du même $IMSI_1$ utilisé pour s'attacher au réseau initial $12_A$.

Dans le présent exemple, le réseau cible $12_B$ choisi est le réseau suivant le réseau courant $12_A$ dans le registre de réseaux autorisés mémorisé dans le module de décision 30.

A l'issue de l'étape 110, une deuxième étape de test 112 est mise en oeuvre.

Dans la deuxième étape de test 112, le module de décision 30 détermine si l'attachement de l'équipement terminal mobile 32 au réseau cible $12_B$ est réussi.

Si l'attachement au réseau cible $12_B$ est réussi, l'étape initiale 100 est à nouveau mise en oeuvre, le réseau courant étant à présent le deuxième réseau $12_B$.

A l'inverse, lorsque l'attachement au réseau cible $12_B$ a échoué, par exemple parce que le niveau de couverture de la station mobile 18 par le réseau cible $12_B$ est insuffisante, alors l'étape de prise de décision 106 est à nouveau mise en oeuvre. Dans ce cas, le troisième réseau $12_C$ est, par exemple, choisi par le module de décision 30 et les étapes 108 et 110 sont à nouveau mises en oeuvre.

Selon le premier exemple, le procédé permet de basculer la station mobile 18 d'un réseau courant $12_A$ ne permettant plus d'offrir un accès satisfaisant aux services mobiles vers un réseau cible $12_B$ permettant, potentiellement, d'offrir à nouveau à l'utilisateur un accès satisfaisant aux services mobiles.

Dans un deuxième exemple, à la différence du premier exemple, l'étape de prise de décision 106 prend en compte une hiérarchisation des réseaux autorisés, en fonction de critères propres au MVNO ou de critères mesurables tels que le tarif des communications. A titre d'illustration, les trois réseaux $12_A$, $12_B$ et $12_C$ sont classés dans le registre de réseaux autorisés mémorisé dans le module de décision 30 par ordre de préférence de sorte que le réseau privilégié soit le premier réseau $12_A$, à défaut le troisième réseau $12_C$ et à défaut le deuxième réseau $12_B$.

Dans un troisième exemple, à la différence du premier exemple, le critère permettant de mettre en oeuvre l'étape de bascule 106 n'est pas la valeur du débit en data mais l'absence de couverture réseau. Dit autrement, la station mobile 18 en couverture du réseau courant 12$_A$ bascule vers le deuxième réseau 12$_B$ parce que la couverture du réseau premier 12$_A$ est perdue, par exemple parce que la puissance de réception du signal radio est inférieure au seuil minimum prévu par les normes de télécommunication, par exemple relevant du standard 3GPP.

Dans un quatrième exemple, le critère de bascule est la position géographique de la station mobile 18. Dans ce cas, à titre d'illustration, le module de décision 30 détermine périodiquement la position de la station mobile 18, par exemple par localisation GPS, et le serveur de connaissances 26 contient une base de données déterminant le réseau à utiliser en priorité en fonction de la position géographique de l'utilisateur. Dans certains modes de réalisation, le module de décision 30 contient une base de données locale alimentée périodiquement par le serveur de connaissances 26, et le module de décision 30 est propre à déterminer, à un instant donné à partir de la base de données locale, le réseau à utiliser en fonction de la position courante de la station mobile 18. Dans d'autres modes de réalisation, la position de l'équipement terminal mobile 32 est transmise par le module de décision 30 au serveur de connaissances 26 lors de l'étape de prise de décision 106 et le serveur de connaissances renvoie, en retour, une information d'identification du réseau cible 12$_B$ sur lequel basculer.

D'une façon générale, l'étape de prise de décision 106 est basée sur au moins un critère.

Par « critère », il est entendu une donnée mesurable sur laquelle est basée la décision de mise en oeuvre d'un basculement d'un réseau courant vers un réseau cible.

Un critère est également défini comme étant une combinaison de critères élémentaires, un critère élémentaire n'étant pas décomposable en plusieurs critères.

De fait, un critère C s'exprime en fonction de n critères élémentaires notés c; de la façon suivante :

$$C = \sum_{i=1}^{n} \alpha_i c_i$$

où n est un entier et où chaque $\alpha_i$ est un coefficient de pondération réel associé au critère élémentaire $c_i$.

En particulier, l'étape de prise de décision 106 est basée sur au moins un critère choisi parmi une liste formée d'au moins deux critères distincts entre eux, un critère de la liste étant l'existence d'une couverture réseau.

Le critère de l'existence d'une couverture réseau repose, par exemple, sur l'existence d'un niveau minimum de puissance de signal radio permettant à la station mobile 18 de communiquer avec le réseau radio, tel que prévu par les normes de télécommunication, par exemple relevant du standard 3GPP, ou tel que paramétré dans le module de décision 30.

De fait, la liste de critères comprend l'existence d'une couverture réseau et au moins un critère ne s'exprimant pas sur la base de l'existence d'une couverture réseau.

Dit autrement, l'étape de prise de décision 106 n'est pas uniquement basée sur l'existence d'une couverture réseau.

Par exemple, la liste des critères comprend deux critères qui sont l'existence d'une couverture réseau et un débit en data supérieur à un seuil de 10 kbits/s.

De préférence, les critères de la liste de critères sont choisis parmi au moins les critères suivants :

- l'existence d'une couverture réseau ;
- un niveau minimum de la couverture réseau, par exemple une puissance de réception minimum ;
- un type de services offerts et la disponibilité en temps réel de chacun des services offerts, pouvant être caractérisés en partie par la disponibilité d'une technologie radio particulière, par exemple la disponibilité d'une couverture data en 4G ;
- une qualité de service en data, tels un débit minimum en data, c'est-à-dire une quantité minimum de paquets envoyés et reçus par unité de temps, et/ou un niveau maximum de latence, c'est-à-dire le temps maximum nécessaire pour transporter un paquet au travers d'un réseau, et/ou un niveau maximum de jigue, c'est-à-dire la variabilité maximale du temps nécessaire pour transporter un paquet au travers d'un réseau ;
- des préférences entre les réseaux ;
- la position géographique de la station mobile 16 ;
- des données de tarification, par exemple des données de tarification propres à chaque réseau autorisé et/ou aux services disponibles sur les réseaux ;
- une date, un jour de la semaine, et/ou un horaire.

Les critères appartiennent à différentes catégories.

Les catégories de critères comprennent au moins les catégories de « couverture réseau », « qualité de service », « position géographique », « date et/ou jour de la semaine et/ou horaire », « hiérarchisation des réseaux » et « préférence de l'utilisateur ».

La catégorie « couverture réseau » regroupe des critères qui sont fonction de l'absence de couverture réseau ou de la présence d'une couverture réseau éventuellement associée à un niveau de couverture réseau minimum prédéfini ou paramétrable.

La catégorie « qualité de service » regroupe des critères qui sont de nature quantitative et fonction des différents services mobiles souscrits et utilisés par l'utilisateur, tel que par exemple un débit de data inférieur à 10 kbit/s, ou un dépassement de seuil sur un autre paramètre de qualité de service.

La catégorie « position géographique » regroupe des critères qui sont basés sur la position géographique de la station mobile 18, comme illustré précédemment par le quatrième exemple.

La catégorie « date et/ou jour de la semaine et/ou horaire » regroupe des critères basés sur la date le jour de la semaine et/ou l'heure courante. A titre d'exemple, pendant les horaires de travail entre 9h00 et 18h00 en semaine, le réseau courant est choisi parmi les trois réseaux $12_A$, $12_B$, $12_C$ alors qu'en-dehors de ces horaires le réseau ne peut pas être modifié.

La catégorie « hiérarchisation des réseaux » regroupe des critères illustrant un ordre de préférence dans la sélection des réseaux 12 qui est renseigné dans le module de décision 30 et éventuellement mis à jour au moyen du serveur de configuration 22. Par exemple, le réseau $12_C$ est privilégié par le MVNO par rapport aux réseaux $12_A$ et $12_B$.

La catégorie « préférences de l'utilisateur » regroupe des critères fixés directement par l'utilisateur, telle qu'une préférence d'un débit en data par rapport à une couverture réseau de type GSM (le réseau cible étant dans ce cas choisi, en priorité, parmi un accès filaire, un accès WIFI, un accès Bluetooth, un accès WiMax ou autre) ou un calendrier d'activation d'une gestion optimisée de réseaux.

Par ailleurs, certains critères sont paramétrables.

De préférence, chaque catégorie comprend au moins un critère paramétrable.

De préférence, les critères paramétrables sont paramétrables à partir de la station mobile 18 ou à partir d'un dispositif distinct de la station mobile 18, par le MVNO ou par l'utilisateur.

Les critères paramétrables par l'utilisateur sont paramétrables, par exemple, à partir d'une interface du module de décision 30 fournie sur l'équipement terminal mobile 32 ou à partir d'une interface du serveur de configuration 22. Il s'agit, par exemple, de renseigner des préférences en termes de type de service ou d'horaires de travail.

Par exemple, les critères paramétrables par le MVNO sont paramétrables au moyen du serveur de téléchargement 24 lors du téléchargement du module de décision 30.

Par exemple, les critères paramétrables par le MVNO sont paramétrables au moyen du serveur de configuration 22 lors du téléchargement de mises à jour des paramètres du module de décision 30.

Par exemple, les critères paramétrables par le MVNO sont paramétrables au moyen du serveur de connaissances 26 lorsque le serveur de connaissances 26 mémorise les réseaux 12 à utiliser en fonction de zones de couverture théoriques.

L'étape de prise de décision 106 est, en outre, basée sur des modes de fonctionnement selon lesquels la prise de décision de s'attacher à un autre réseau est soit indépendante d'une action manuelle de l'utilisateur de la station mobile 18, soit fonction d'une action manuelle de l'utilisateur de la station mobile 18, en fonction des paramétrages courants du module de décision 30.

L'étape de prise de décision 106 est basée sur l'un des trois modes de fonctionnement suivants :

- un mode de fonctionnement manuel, dans lequel la prise de décision de s'attacher à un autre réseau est basée sur une action manuelle d'un utilisateur de la station mobile 18 ;
- un mode de fonctionnement guidé, dans lequel la prise de décision est basée sur le choix d'un utilisateur de la station mobile 18 suite à une proposition d'attachement à au moins un réseau différent du réseau courant fournie par le module de décision 30, et
- un mode de fonctionnement automatique, dans lequel la prise de décision est indépendante de toute action d'un utilisateur de la station mobile 18.

Le dispositif de gestion des accès à l'infrastructure 10 présente comme avantage de réduire les risques de perte ou de dégradation de l'accès à des services mobiles.

De fait, disposer d'une station mobile 18 propre à s'attacher à différents réseaux 12 appartenant à des MNO distincts réduit considérablement les inconvénients liés à la défaillance ou à la perte de la couverture d'un réseau.

En outre, le procédé proposé est simple à implémenter et ne requiert aucune modification structurelle de la station mobile 18.

Le procédé proposé présente également comme avantage d'être facilement modulable. De fait, les mises à jour du module de décision 30 peuvent être effectuées automatiquement, et les critères sont simplement modifiables par l'utilisateur, ou à distance par le MVNO à partir de données contenues dans le serveur de téléchargement 24 ou le serveur de configuration 22 ou le serveur de connaissances 26.

D'autres modes de réalisation sont possibles.

En variante, l'infrastructure 10 comprend plus ou moins de trois réseaux 12.

Dans d'autres modes de réalisation, l'infrastructure 10 comprend des réseaux de télécommunication répartis sur différents territoires, par exemple pour la fourniture de services de communications mobiles en zone frontalière. Par exemple, le premier réseau $12_A$ et le deuxième réseau $12_B$ appartiennent à des opérateurs de téléphonie mobile français tandis que le troisième réseau $12_C$ appartient à un opérateur de réseau mobile allemand.

En variante, l'infrastructure 10 comprend également l'accès à un ou des réseaux radio de technologie différente des technologies de communication mobile du type 2G, 3G et 4G, tels les technologies WiFi, WiMax, Bluetooth, ou encore PMR numérique. Dans ce cas, les identifiants permettant l'accès à chacun des réseaux ne sont pas forcément des IMSI et sont issus des normes propres à ces technologies. Dans ce cas, les dispositifs d'attachement 34 ne sont pas nécessairement des cartes SIM, et le procédé et l'architecture de l'infrastructure 10 fonctionnent de manière analogue en étant adaptés en conséquence.

Dans d'autres modes de réalisation, l'infrastructure 10 comprend un réseau radio privé, par exemple de type PMR LTE, appelé $12_D$.

Dans de tels cas, le réseau PMR $12_D$ est inclus dans le registre de réseaux autorisés mémorisé dans le module de décision 30 et peut être considéré comme prioritaire sur les réseaux mobiles $12_A$, $12_B$ et $12_C$.

Le dispositif d'attachement 34 contient, par exemple, un IMSI distinct du ou des IMSI utilisés pour l'accès aux réseaux mobiles $12_A$, $12_B$ et $12_C$ qui est utilisé par le module d'attachement 28 pour déclencher la mise en oeuvre d'un attachement au réseau radio privé sur requête du module de décision 30.

Avantageusement, dans ce cas, la couverture du réseau radio privé étant connue, un attachement préférentiel sur le réseau $12_D$ en fonction de la position géographique de l'équipement terminal mobile 32 est mis en oeuvre par le module de décision 30.

Dans d'autres modes de réalisation, le HSS 14 appartient au MVNO propriétaire du dispositif de gestion 16, ou le MVNO interagit avec plusieurs MVNE, ou le MVNO a recours à plusieurs HSS, ou le MVNO est aussi le MVNE, ou le MVNO est aussi un MNO.

Dans d'autres modes de réalisation, certaines stations mobiles 18 ne sont pas des téléphones portables, mais des tablettes, ou des ordinateurs.

En variante, une station mobile 18 est un modem de type 2G, 3G ou 4G propre à offrir des liaisons WIFI ou Ethernet à des utilisateurs. Dans de tels cas, la station mobile 18 est munie d'une carte SIM identique à la carte SIM 34 décrite en référence aux figures 1 et 2.

Dans d'autres modes de réalisation, le système d'exploitation de l'équipement terminal mobile 32 n'est pas de type Android mais, par exemple, un système d'exploitation iOS, Windows Phone, BlackBerry OS ou encore Linux.

Selon une variante non couverte par les revendications, le module de décision 30 est mémorisé non pas dans l'équipement terminal mobile 32 mais dans le dispositif d'attachement 34.

Selon une variante non couverte par les revendications, le module d'attachement 28 et le module de décision 30 ne sont pas distincts. Dans un tel cas, un unique module remplit les fonctions des modules d'attachement 28 et de décision 30 et est, par exemple, mémorisé dans le dispositif d'attachement 34.

Dans un autre mode de réalisation non couvert par les revendications, le message de bascule ne comprend pas d'information d'identification du réseau cible. Alternativement, le réseau cible est choisi par le module d'attachement 28 en fonction d'un sous-ensemble de critères de la liste de critères.

Les modes de réalisation, variantes ou alternatives présentées précédemment sont combinables pour générer, lorsque cela est techniquement possible, d'autres modes de réalisation.

LEXIQUE

GPS : sigle de « Global Positioning System » pour « système mondiale de positionnement »

GSM (ou 2G) : sigle de « Global System for Mobile Communications » pour « système global pour les communications mobiles » ou pour « groupe spécial mobile »

HSS : sigle de « Home Subscriber Server » pour « serveur central d'abonnés »

IMSI : sigle de « International Mobile Subscriber Identity » pour « identité internationale d'abonné mobile », également appelé numéro d'identification mobile

LTE (ou 4G) : sigle de « Long Term Evolution » pour « évolution long terme »

MNO : sigle de « Mobile Network Operator » pour « opérateur de réseau mobile », qui désigne une compagnie qui possède son propre réseau radio de télécommunication mobile

MVNE : sigle de « Mobile Virtual Network Enabler » pour « fournisseur de services de réseau mobile virtuel », qui désigne une compagnie offrant des solutions techniques permettant à un MVNO de proposer des services mobiles sans déployer de coeur de réseau mobile complet ni d'interconnexion directe avec un ou plusieurs MNO

MVNO : sigle de « Mobile Virtual Network Operator » pour « opérateur de téléphonie mobile virtuel », également appelé opérateur de services mobiles, qui désigne une compagnie de télécommunication qui, ne possédant pas de réseau d'accès radio en propre, loue les réseaux d'un ou plusieurs MVNE et/ou MNO pour pouvoir proposer des services mobiles

PMR : sigle de « Private Mobile Radiocommunications » ou « Professional Mobile Radiocommunications » pour « réseau mobile privé de radiocommunication »

SIM : sigle de « Subscriber Identity Module » pour « module d'identification d'abonné »

UMTS (ou 3G) : sigle de « Universal Mobile Télécommunications System » pour « système de télécommunication mobile universel »

## Revendications

1. Procédé de gestion des accès à une infrastructure (10) de télécommunication comprenant :

   - des réseaux ($12_A$, $12_B$, $12_C$) de télécommunication, et
   - une station mobile (18) propre à s'attacher aux réseaux ($12_A$, $12_B$, $12_C$) à partir d'un numéro d'identification mobile ($IMSI_1$),
   
   ledit procédé comprenant:

   - une étape initiale de tentative d'attachement de la station mobile (18) à un réseau, dit réseau courant ($12_A$) et appartenant à un opérateur de réseau mobile courant ($MNO_A$), la station mobile réussissant ou non à s'attacher audit réseau courant ($12_A$),
   - une étape de mesure périodique que le débit en data à un instant est supérieur à un seuil,
   - une première étape de test pour déterminer si le débit en data est inférieur au seuil pendant une durée prédéterminée,

   si le débit dépasse le seuil, pendant la durée prédéterminée, l'étape initiale est à nouveau mise en oeuvre, et
   si le débit en data est inférieure au seuil pendant la durée prédéterminée, une étape suivante de prise de décision est mise en oeuvre, - une étape de prise de décision (106) de s'attacher à un autre réseau, dit réseau cible ($12_B$) et appartenant à un opérateur de réseau mobile cible ($MNO_B$) distinct de l'opérateur de réseau mobile courant ($MNO_A$), la prise de décision (106) étant basée sur au moins un critère choisi parmi une liste formée d'au moins trois critères distincts entre eux, un critère de la liste étant l'existence d'une couverture réseau, un autre critère de la liste étant un critère de la catégorie « date et/ou jour de la semaine et/ou horaire » et encore un autre de la liste étant un débit minimum en data, et/ou une latence maximum, et/ou une jigue maximum, les critères étant paramétrables à partir de la station mobile (18) ou à partir d'un dispositif (22, 24, 26) distinct de la station mobile (18), la prise de décision (106) étant, en outre, basée sur des modes de fonctionnement selon lesquels la prise de décision de s'attacher à un autre réseau est soit indépendante d'une action manuelle de l'utilisateur de la station mobile (18), soit fonction d'une action manuelle de l'utilisateur de la station mobile (18), en fonction des paramétrages courants du module de décision (30), l'étape de prise de décision (106) étant basée sur l'un des trois modes de fonctionnement suivants :

   - un mode de fonctionnement manuel, dans lequel la prise de décision de s'attacher à un autre réseau est basée sur une action manuelle d'un utilisateur de la station mobile (18),
   - un mode de fonctionnement guidé, dans lequel la prise de décision est basée sur le choix d'un utilisateur de la station mobile (18) suite à une proposition d'attachement à au moins un réseau différent du réseau courant fournie par le module de décision (30), et
   - un mode de fonctionnement automatique, dans lequel la prise de décision est indépendante de toute action d'un utilisateur de la station mobile (18), et
   - une étape d'initiation d'un attachement (108, 110) de la station mobile (18) au réseau cible ($12_B$) à partir du même numéro d'identification mobile ($IMSI_1$),
   - une deuxième étape de test pour déterminer si l'attachement par la station mobile (18) au réseau cible ($12_B$) a réussi ou non, l'étape initiale étant à nouveau mise en oeuvre si l'attachement a réussi et l'étape de prise de décision étant à nouveau mise en oeuvre sinon,

   la station mobile (18) comprenant un équipement terminal mobile (32) et un dispositif d'attachement (34) propre à être installé dans l'équipement terminal mobile (32), l'étape de prise de décision (106) étant mise en oeuvre par un module de décision (30) et la mise en oeuvre de l'étape d'initiation d'un attachement (108, 110) étant déclenchée par un module d'attachement (28) distinct du module de décision (30), le module de décision (30) étant mémorisé dans une mémoire de l'équipement terminal mobile (32) et le module d'attachement (28) étant mémorisé dans une mémoire du dispositif d'attachement (34),
   le module de décision (30) étant propre à mémoriser un registre de réseaux autorisés comprenant des réseaux, le réseau cible ($12_B$) étant choisi parmi les réseaux du registre de réseaux autorisés mémorisé dans le module de décision (30),
   l'étape de prise de décision (106) comprenant la détermination par le module de décision (30) du réseau cible ($12_B$) parmi les réseaux du registre de réseaux autorisés mémorisé dans le module de décision (30) et vérifiant l'au moins un critère et la transmission, depuis le module de décision (30) vers le module d'attachement (28), d'un message de bascule comprenant une information d'identification du réseau cible ($12_B$), le module d'attachement (28) étant propre à déclencher la mise en oeuvre de l'initiation d'un attachement (108, 110) de l'équipement terminal mobile (32) au réseau cible (12$_B$) à la réception dudit message de bascule, l'étape de prise de décision étant uniquement prise par le module de décision (30) sans interaction avec l'extérieur de l'équipement terminal mobile, l'étape de mesure, la première étape de test, la deuxième étape de test étant mise en oeuvre par le module de décision (30).

2. Produit programme d'ordinateur comportant un support lisible d'informations, sur lequel est mémorisé un programme d'ordinateur comprenant des instructions de programme, le programme d'ordinateur étant chargeable sur une unité de traitement de données faisant partie d'une station mobile (18) et adapté pour entraîner la mise en oeuvre d'un procédé selon la revendication 1 lorsque le programme d'ordinateur est mis en oeuvre sur l'unité de traitement des données.

3. Infrastructure (10) de télécommunication, comprenant :

- des réseaux (12$_A$, 12$_B$, 12$_C$) de télécommunication, et
- une station mobile (18) propre à s'attacher aux réseaux (12$_A$, 12$_B$, 12$_C$) à partir d'un numéro d'identification mobile (IMSI$_1$), l'infrastructure (10) de télécommunication comprenant une station mobile (18), la la station mobile (18) comprenant un équipement terminal mobile (32) et un dispositif d'attachement (34) propre à être installé dans l'équipement terminal mobile (32), le module de décision (30) étant mémorisé dans une mémoire de l'équipement terminal mobile (32) et un module d'attachement (28) distinct du module de décision (30) étant mémorisé dans une mémoire du dispositif d'attachement (34), l'infrastructure (10) de télécommunication étant propre à mettre en oeuvre :

- une étape initiale initiale de tentative d'attacher la station mobile (18) à un réseau, dit réseau courant (12$_A$) et appartenant à un opérateur de réseau mobile courant (MNO$_A$), la station mobile réussissant ou non à s'attacher audit réseau courant (12$_A$),
- une étape de mesure périodiquement que le débit en data à un instant est supérieur à un seuil,
- une étape de test du débit en data pour déterminer si le débit en data est inférieur au seuil pendant une durée prédéterminée,

si le débit dépasse le seuil, pendant la durée prédéterminée, l'étape initiale est à nouveau mise en oeuvre, et
si le débit en data est inférieure au seuil pendant la durée prédéterminée, une étape suivante de prise de décision est mise en oeuvre,

- une étape de prise de décision de s'attacher à un autre réseau, dit réseau cible (12$_B$) et appartenant à un opérateur de réseau mobile cible (MNO$_B$) distinct de l'opérateur de réseau mobile courant (MNO$_A$), l'étape de prise de décision (106) étant mise en oeuvre par le module de décision (30), la prise de décision (106) étant basée sur au moins un critère choisi parmi une liste formée d'au moins trois critères distincts entre eux, un critère de la liste étant l'existence d'une couverture réseau, un autre critère de la liste étant un critère de la catégorie « date et/ou jour de la semaine et/ou horaire » et encore un autre de la liste étant un débit minimum en data, et/ou une latence maximum, et/ou une jigue maximum, les critères étant paramétrables à partir de la station mobile (18) ou à partir d'un dispositif (22, 24, 26) distinct de la station mobile (18), la prise de décision (106) étant, en outre, basée sur des modes de fonctionnement selon lesquels la prise de décision de s'attacher à un autre réseau est soit indépendante d'une action manuelle de l'utilisateur de la station mobile (18), soit fonction d'une action manuelle de l'utilisateur de la station mobile (18), en fonction des paramétrages courants du module de décision (30), l'étape de prise de décision (106) étant basée sur l'un des trois modes de fonctionnement suivants :

- un mode de fonctionnement manuel, dans lequel la prise de décision de s'attacher à un autre réseau est basée sur une action manuelle d'un utilisateur de la station mobile (18),
- un mode de fonctionnement guidé, dans lequel la prise de décision est basée sur le choix d'un utilisateur de la station mobile (18) suite à une proposition d'attachement à au moins un réseau différent du réseau courant fournie par le module de décision (30), et
- un mode de fonctionnement automatique, dans lequel la prise de décision est indépendante de toute action d'un utilisateur de la station mobile (18), et

- une étape d'initiation d'un attachement (108, 110) de la station mobile (18) au réseau cible (12$_B$) à partir du même numéro d'identification mobile (IMSI₁), la mise en oeuvre de l'étape d'initiation d'un attachement (108, 110) étant déclenchée par un module d'attachement (28) distinct du module de décision (30)

le module de décision (30) étant propre à mémoriser un registre de réseaux autorisés comprenant des réseaux, le réseau cible (12_B) étant choisi parmi les réseaux du registre de réseaux autorisés mémorisé dans le module de décision (30),
l'étape de prise de décision (106) comprenant la détermination par le module de décision (30) du réseau cible (12_B) parmi les réseaux du registre de réseaux autorisés mémorisé dans le module de décision (30) et vérifiant l'au moins un critère et la transmission, depuis le module de décision (30) vers le module d'attachement (28), d'un message de bascule comprenant une information d'identification du réseau cible (12_B), le module d'attachement (28) étant propre à déclencher la mise en oeuvre de l'initiation d'un attachement (108, 110) de l'équipement terminal mobile (32) au réseau cible (12_B) à la réception dudit message de bascule,
l'étape de prise de décision étant uniquement prise par le module de décision (30) sans interaction avec l'extérieur de l'équipement terminal mobile, l'étape de mesure et les étapes de test étant mises en oeuvre par le module de décision (30).

**Patentansprüche**

1. Zugangsverwaltungsverfahren zu einer Telekommunikationsinfrastruktur (10), umfassend:

- Telekommunikationsnetzwerke (12_A, 12_B, 12_C), und
- eine mobile Station (18), die geeignet ist, um sich anhand einer mobilen Identifikationsnummer (IMSI₁) an die Netzwerke (12_A, 12_B, 12_C) anzubinden,
das Verfahren umfassend:

- einen anfänglichen Versuchsschritt, die mobile Station (18) an ein Netzwerk anzubinden, das als aktuelles Netzwerk (12_A) bezeichnet wird und zu einem aktuellen Mobilfunknetzbetreiber (MNO_A) gehört, wobei es der mobilen Station gelingt oder nicht gelingt, sich an das aktuelle Netzwerk (12_A) anzubinden,
- einen periodischen Messschritt, dass die Datenrate zu einem Zeitpunkt größer als ein Schwellenwert ist,

- einen ersten Testschritt, um zu bestimmen, ob die Datenrate über eine vorbestimmte Zeitdauer kleiner als der Schwellenwert ist,

wenn die Rate den Schwellenwert übersteigt, während der vorbestimmten Zeit, wird der anfängliche erneut durchgeführt, und
wenn der Datendurchsatz während der vorbestimmten Zeit kleiner als der Schwellenwert ist, wird ein nachfolgender Entscheidungsfindungsschritt durchgeführt, - ein Entscheidungsfindungsschritt (106), sich an ein anderes Netzwerk anzubinden, das als Zielnetz (12_B) bezeichnet wird und zu einem Ziel-Mobilfunknetzbetreiber (MNO_B) gehört, der sich von dem aktuellen Mobilfunknetzbetreiber (MNO_A) unterscheidet, wobei die Entscheidungsfindung (106) auf mindestens einem Kriterium basiert, das ausgewählt ist aus einer Liste, die aus mindestens drei voneinander verschiedenen Kriterien gebildet ist, wobei ein Kriterium der Liste das Vorhandensein einer Netzabdeckung ist, ein weiteres Kriterium der Liste ein Kriterium der Kategorie "Datum und/oder Wochentag und/oder Uhrzeit" ist, ein weiteres der Liste eine minimale Datenrate und/oder eine maximale Latenz und/oder ein maximales Jig ist, wobei die Kriterien von der mobilen Station (18) aus oder von einer Vorrichtung (22, 24, 26), die sich von der mobilen Station (18) unterscheidet, aus parametrierbar sind, wobei die Entscheidungsfindung (106) ferner auf Betriebsmodi basiert, bei denen die Entscheidungsfindung, sich an ein anderes Netzwerk anzubinden, entweder unabhängig von einer manuellen Aktion des Benutzers der mobilen Station (18) ist oder von einer manuellen Aktion des Benutzers der mobilen Station (18) abhängt, abhängig von den aktuellen Parametern des Entscheidungsmoduls (30), wobei der Entscheidungsfindungsschritt (106) auf einem der folgenden drei Betriebsmodi basiert:

- einen manuellen Betriebsmodus, in dem die Entscheidungsfindung, sich an ein anderes Netzwerk anzubinden, auf einer manuellen Handlung eines Benutzers der mobilen Station (18) basiert,
- einen geführten Betriebsmodus, in dem die Entscheidungsfindung auf der Wahl eines Benutzers der mobilen Station (18) infolge eines Vorschlags von dem Entscheidungsmodul (30) zur Anbindung an mindestens ein von dem aktuellen Netzwerk verschiedenes Netzwerk basiert, und
- einen automatischen Betriebsmodus, in dem die Entscheidungsfindung unabhängig von jeglicher Aktion eines Benutzers der mobilen Station (18) ist, und

- einen Einleitungsschritt einer Bindung (108, 110) der mobilen Station (18) an das Zielnetzwerk ($12_B$) anhand der gleichen mobilen Identifikationsnummer ($IMSI_1$),

- einen zweiten Testschritt, um zu bestimmen, ob die Anbindung durch die mobile Station (18) an das Zielnetzwerk ($12_B$) erfolgreich war oder nicht, wobei der Anfangsschritt erneut durchgeführt wird, wenn die Bindung erfolgreich war, und der Entscheidungsschritt andernfalls erneut durchgeführt wird,

die mobile Station (18) umfassend eine mobile Endgeräteausrüstung (32) und eine Anbringungsvorrichtung (34) umfasst, die geeignet ist, in der mobilen Endgeräteausrüstung (32) installiert zu werden, wobei der Schritt der Entscheidungsfindung (106) durch ein Entscheidungsmodul (30) durchgeführt wird und die Implementierung des Einleitungsschritts einer Anbindung (108, 110) durch ein von dem Entscheidungsmodul (30) verschiedenes Anbindungsmodul (28) ausgelöst wird, wobei das Entscheidungsmodul (30) in einem Speicher der mobilen Endgeräteausrüstung (32) gespeichert ist und das Anbindungsmodul (28) in einem Speicher der Anbringungsvorrichtung (34) gespeichert ist, wobei das Entscheidungsmodul (30) geeignet ist, um ein Register autorisierter Netzwerke zu speichern, umfassend Netzwerke, wobei das Zielnetzwerk ($12_B$) aus den Netzwerken des Registers autorisierter Netzwerke ausgewählt ist, das in dem Entscheidungsmodul (30) gespeichert ist, der Entscheidungsfindungsschritt (106) umfassend die Bestimmung, durch das Entscheidungsmodul (30), des Zielnetzes ($12_B$) aus den Netzen des Registers der autorisierten Netze, die in dem Entscheidungsmodul (30) gespeichert sind und ein Überprüfen mindestens eines Kriteriums, und die Übertragung, von dem Entscheidungsmodul (30) an das Anbindungsmodul (28), einer Umschaltnachricht, umfassend eine Information zur Identifizierung des Zielnetzes ($12_B$), wobei das Anbindungsmodul (28) geeignet ist, die Durchführung der Einleitung einer Anbindung (108, 110) der mobilen Endgeräteausrüstung (32) an das Zielnetz ($12_B$) bei Empfang der Umschaltnachricht auszulösen, wobei der Entscheidungsfindungsschritt nur von dem Entscheidungsmodul (30) ohne Interaktion mit der Außenseite des mobilen Endgeräts durchgeführt wird, wobei der Messschritt, der erste Testschritt, der zweite Testschritt durch das Entscheidungsmodul (30) durchgeführt werden.

2. Computerprogrammprodukt, umfassend einen lesbaren Informationsträger, auf dem ein Computerprogramm umfassend Programmanweisungen gespeichert ist, wobei das Computerprogramm auf eine Datenverarbeitungseinheit geladen werden kann, die Teil einer mobilen Station (18) ist und angepasst ist, um die Durchführung eines Verfahrens nach Anspruch 1 zu bewirken, wenn das Computerprogramm auf der Datenverarbeitungseinheit durchgeführt wird.

3. Telekommunikationsinfrastruktur (10), umfassend:

- Telekommunikationsnetzwerke ($12_A$, $12_B$, $12_C$), und
- eine mobile Station (18), die geeignet ist, um sich anhand einer mobilen Identifikationsnummer ($IMSI_1$) an die Netzwerke ($12_A$, $12_B$, $12_C$) anzubinden,

die Telekommunikationsinfrastruktur (10) umfassend eine mobile Station (18), die mobile Station (18) umfassend eine mobile Endgeräteausrüstung (32) und eine Anbindungsvorrichtung (34), die geeignet ist, um in der mobilen Endgeräteausrüstung (32) installiert zu werden, wobei das Entscheidungsmodul (30) in einem Speicher der mobilen Endgeräteausrüstung (32) gespeichert ist und ein Anbindungsmodul (28), das sich von dem Entscheidungsmodul (30) unterscheidet, in einem Speicher der Anbindungsvorrichtung (34) gespeichert ist, wobei die Telekommunikationsinfrastruktur (10) geeignet ist, um Folgendes durchzuführen:

- einen anfänglichen Versuchsschritt, die mobile Station (18) an ein Netzwerk anzubinden, das als aktuelles Netzwerk ($12_A$) bezeichnet wird und zu einem aktuellen Mobilfunknetzbetreiber ($MNO_A$) gehört, wobei es der mobilen Station gelingt oder nicht gelingt, sich an das aktuelle Netzwerk ($12_A$) anzubinden,

- einen periodischen Messschritt, dass die Datenrate zu einem Zeitpunkt größer als ein Schwellenwert ist,

- einen Testschritt der Datenrate, um zu bestimmen, ob die Datenrate über eine vorbestimmte Zeitdauer kleiner als der Schwellenwert ist,

wenn die Rate den Schwellenwert übersteigt, während der vorbestimmten Zeit, wird der anfängliche erneut durchgeführt, und

wenn die Datenrate während der vorbestimmten Zeit kleiner als der Schwellenwert ist, wird ein nachfolgender Entscheidungsfindungsschritt durchgeführt,

- einen Entscheidungsfindungsschritt, sich an ein anderes Netzwerk anzubinden, das als Zielnetz ($12_B$) bezeichnet wird und zu einem Ziel-Mobilfunknetzbetreiber ($MNO_B$) gehört, der sich von dem aktuellen Mobilfunknetzbetreiber ($MNO_A$) unterscheidet, wobei der Entscheidungsfindungsschritt (106) von dem Entscheidungsmodul (30) durchgeführt wird, wobei die Entscheidungsfindung (106) auf mindestens einem Kriterium basiert, das ausgewählt ist aus einer Liste, die aus mindestens drei voneinander verschiedenen Kriterien gebildet ist, wobei ein Kriterium der Liste das Vorhandensein einer Netzabdeckung ist, ein weiteres Kriterium der Liste ein Kriterium der Kategorie "Datum und/oder Wochentag und/oder Uhrzeit" ist, ein weiteres der Liste eine minimale Datenrate und/oder eine maximale Latenz und/oder ein maximales Jig ist, wobei die Kriterien von der mobilen Station (18) aus oder von einer Vorrichtung (22, 24, 26), die sich von der mobilen Station (18) unterscheidet, aus parametrierbar sind, wobei die Entscheidungsfindung (106) ferner auf Betriebsmodi basiert, bei denen die Entscheidungsfindung, sich an ein anderes Netzwerk anzubinden, entweder unabhängig von einer manuellen Aktion des Benutzers der mobilen Station (18) ist oder von einer manuellen Aktion des Benutzers der mobilen Station (18) abhängt, abhängig von den aktuellen Parametern des Entscheidungsmoduls (30), wobei Entscheidungsfindungsschritt (106) auf einem der folgenden drei Betriebsmodi basiert:

- einen manuellen Betriebsmodus, in dem die Entscheidungsfindung, sich an ein anderes Netzwerk anzubinden, auf einer manuellen Handlung eines Benutzers der mobilen Station (18) basiert,
- einen geführten Betriebsmodus, in dem die Entscheidungsfindung auf der Wahl eines Benutzers der mobilen Station (18) infolge eines Vorschlags von dem Entscheidungsmodul (30) zur Anbindung an mindestens ein von dem aktuellen Netzwerk verschiedenes Netzwerk basiert, und
- einen automatischen Betriebsmodus, in dem die Entscheidungsfindung unabhängig von jeglicher Aktion eines Benutzers der mobilen Station (18) ist, und

- einen Einleitungsschritt einer Bindung (108, 110) der mobilen Station (18) an das Zielnetzwerk ($12_B$) anhand der gleichen mobilen Identifikationsnummer ($IMSI_1$), wobei die Durchführung des Einleitungsschritts einer Anbindung (108, 110) durch ein von dem Entscheidungsmodul (30) getrenntes Anbindungsmodul (28) ausgelöst wird,

wobei das Entscheidungsmodul (30) geeignet ist, um ein Register autorisierter Netzwerke zu speichern, umfassend Netzwerke, wobei das Zielnetzwerk ($12_B$) aus den Netzwerken des Registers autorisierter Netzwerke ausgewählt ist, das in dem Entscheidungsmodul (30) gespeichert ist,
der Entscheidungsfindungsschritt (106) umfassend die Bestimmung, durch das Entscheidungsmodul (30), des Zielnetzes ($12_B$) aus den Netzen des Registers der autorisierten Netze, die in dem Entscheidungsmodul (30) gespeichert sind und ein Überprüfen mindestens eines Kriteriums, und die Übertragung, von dem Entscheidungsmodul (30) an das Anbindungsmodul (28), einer Umschaltnachricht, umfassend eine Information zur Identifizierung des Zielnetzes ($12_B$), wobei das Anbindungsmodul (28) geeignet ist, die Durchführung der Einleitung einer Anbindung (108, 110) der mobilen Endgeräteausrüstung (32) an das Zielnetz ($12_B$) bei Empfang der Umschaltnachricht auszulösen, wobei der Entscheidungsfindungsschritt nur von dem Entscheidungsmodul (30) ohne Interaktion mit der Außenseite des mobilen Endgeräts durchgeführt wird, wobei der Messschritt und die Testschritte durch das Entscheidungsmodul (30) durchgeführt werden.

**Claims**

1. A method for managing access to a telecommunication infrastructure (10), comprising:

- telecommunication networks ($12_A$, $12_B$, $12_C$), and
- a mobile station (18) adapted to connect to the networks ($12_A$, $12_B$, $12_C$) from a mobile identification number ($IMSI_1$),
said method comprising the following steps:

- an initial step of trying to connect the mobile station (18) to a network, called current network ($12_A$), and belonging to a target mobile network operator ($MNO_B$) different from the current mobile network operator ($MNO_A$), the mobile station (18) having succeeded or not succeeded in connecting to said current network ($12_A$),
- a step of periodic measurement that a data throughput is superior to a threshold,
- a first step of determining whether the data throughput is below the threshold during a predetermined time duration,

if the data throughput is superior to the threshold during the predetermined time duration, the initial step is carried out again,
if the data throughput is inferior to the threshold during the predetermined time duration, the next step of deciding is carried out,

- deciding (106) to connect to another network, called target network ($12_B$) and belonging to a target mobile network operator ($MNO_B$) different from the current mobile network operator ($MNO_A$), the decision-making (106) being based on at least one criterion chosen from a list made up of at least three criteria that are different from one another, one criterion from the list being the existence of network coverage, another criteria being a criteria of the category "date and/or day of the week and/or time" and still another criteria of the list being a minimum data throughput, and/or a maximum latency level, and/or a maximum jitter level, the criteria being parametrizable from the mobile station (18) or from a device (22, 24, 26) distinct from the mobile station (18), the decision step (106) further being based on operating modes according to which the deciding-making to connect to another network is either independent from a manual action of user of the mobile station (18) or function of a manual action of user of the mobile station (18) depending from the current parameters of the decision-making module (30), the decision step (106) being based on one of the following three operating modes:

- a manual operating mode, in which the decision to connect to another network is based on a manual action by an operator of the mobile station (18),
- a guided operating mode, in which the decision is based on the choice by a user of the mobile station (18) following a proposed connection to at least one network different from the current network provided by the decision-making module (30), and
- an automatic operating mode, in which the decision is independent of any action by a user of the mobile station (18), and

- a step of initiating a connection (108, 110) of the mobile station (18) to the target network ($12_B$) from the same mobile identification number ($IMSI_1$),
- a second step of testing to determine whether the connection of the mobile station (18) to the target network ($12_B$) has succeeded or not, the initial step being carried out again if the connection has succeeded and otherwise, the step of deciding being carried out again,

the mobile station (18) comprising a piece of mobile terminal equipment (32) and a connection device (34) capable of being installed in the piece of mobile terminal equipment (32), the decision-making step (106) being carried out by a decision-making module (30) and the implementation of the step for initiating a connection (108, 110) being triggered by a connection module (28) separate from the decision-making module (30), the decision-making module (30) being stored in a memory of the mobile terminal equipment (32) and the connection module (28) being stored in a memory of the connection device (34),
the decision-making module (30) being adapted to store a register of authorized networks comprising networks, the target network ($12_B$) being chosen from among the networks of the register of authorized networks stored in the decision-making module (30),
the decision step (106) comprising the determination by the decision-making module (30) of the target network ($12_B$) among the networks of the register of authorized networks stored in the decision-making module (30) and fulfilling said at least one criteria and the sending, from the decision-making module (30) to the connection module (28), of a switching message comprising identification information of the target network ($12_B$), the connection module (28) being adapted to trigger the implementation of the initiation of a connection (108, 110) of the mobile terminal equipment (32) to the target network ($12_B$) upon receiving said switching message
the decision step being only made by the decision-making module (30) without interaction with the outside of the mobile terminal equipment, the measuring test, the step of first testing, the step of second testing being carried out by the decision-making module (30).

2. A computer program product including a readable information medium, on which a computer program is stored comprising program instructions, the computer program being able to be loaded on a data processing unit which is part of a mobile station (18) and suitable for driving the implementation of a method according to claim 1 when the computer program is implemented on the data processing unit.

3. A telecommunication infrastructure (10), comprising:

- telecommunication networks ($12_A$, $12_B$, $12_C$), and
- a mobile station (18) is capable of connecting to the networks ($12_A$, $12_B$, $12_C$) from a mobile identification number ($IMSI_1$), the telecommunication infrastructure (10) comprising a mobile station (18), the mobile station (18) comprising a piece of mobile terminal equipment (32) and a connection device (34) capable of being installed in the piece of mobile terminal equipment (32), the decision-making module (30) being stored in a memory of the mobile terminal equipment (32) and a connecting module (28) different from the decision-making module (30) being stored in a memory of the connection device (34),the telecommunication infrastructure (10) being capable of carrying out:

- an initial step of trying to connect the mobile station (18) to a network, called current network ($12_A$), and belonging to a target mobile network operator ($MNO_B$) different from the current mobile network operator ($MNO_A$), the mobile station (18) having succeeded or not succeeded in connecting to said current network ($12_A$),
- a step of periodic measurement that a data throughput is superior to a threshold,
- a first step of determining whether the data throughput is below the threshold during a predetermined time duration,

if the data throughput is superior to the threshold during the predetermined time duration, the initial step is carried out again,
if the data throughput is inferior to the threshold during the predetermined time duration, the next step of deciding is carried out,

- deciding (106) to connect to another network, called target network ($12_B$) and belonging to a target mobile network operator ($MNO_B$) different from the current mobile network operator ($MNO_A$), the decision-making (106) being based on at least one criterion chosen from a list made up of at least three criteria that are different from one another, one criterion from the list being the existence of network coverage, another criteria being a criteria of the category "date and/or day of the week and/or time" and still another criteria of the list being a minimum data throughput, and/or a maximum latency level, and/or a maximum jitter level, the criteria being parametrizable from the mobile station (18) or from a device (22, 24, 26) distinct from the mobile station (18), the decision step (106) further being based on operating modes according to which the deciding-making to connect to another network is either independent from a manual action of user of the mobile station (18) or function of a manual action of user of the mobile station (18) depending from the current parameters of the decision-making module (30), the decision step (106) being based on one of the following three operating modes:

- a manual operating mode, in which the decision to connect to another network is based on a manual action by an operator of the mobile station (18),
- a guided operating mode, in which the decision is based on the choice by a user of the mobile station (18) following a proposed connection to at least one network different from the current network provided by the decision-making module (30), and
- an automatic operating mode, in which the decision is independent of any action by a user of the mobile station (18), and

- a step of initiating a connection (108, 110) of the mobile station (18) to the target network ($12_B$) from the same mobile identification number ($IMSI_1$),
- a second step of testing to determine whether the connection of the mobile station (18) to the target network ($12_B$) has succeeded or not, the initial step being carried out again if the connection has succeeded and otherwise, the step of deciding being carried out again,

the mobile station (18) comprising a piece of mobile terminal equipment (32) and a connection device (34) capable of being installed in the piece of mobile terminal equipment (32), the decision-making step (106) being carried out by a decision-making module (30) and the implementation of the step for initiating a connection (108, 110) being triggered by a connection module (28) separate from the decision-making module (30), the decision-making module (30) being stored in a memory of the mobile terminal equipment (32) and the connection module (28) being stored in a memory of the connection device (34),

the decision-making module (30) being adapted to store a register of authorized networks comprising networks, the target network $(12_B)$ being chosen from among the networks of the register of authorized networks stored in the decision-making module (30),

the decision step (106) comprising the determination by the decision-making module (30) of the target network $(12_B)$ among the networks of the register of authorized networks stored in the decision-making module (30) and fulfilling said at least one criteria and the sending, from the decision-making module (30) to the connection module (28), of a switching message comprising identification information of the target network $(12_B)$, the connection module (28) being adapted to trigger the implementation of the initiation of a connection (108, 110) of the mobile terminal equipment (32) to the target network $(12_B)$ upon receiving said switching message

the decision step being only made by the decision-making module (30) without interaction with the outside of the mobile terminal equipment, the measuring test, the step of first testing, the step of second testing being carried out by the decision-making module (30).

FIG.1

EP 3 545 711 B1

-32-

34

18

# FIG.2

FIG.3

## RÉFÉRENCES CITÉES DANS LA DESCRIPTION

**Documents brevets cités dans la description**

- US 2012166622 A1
- US 2010017861 A1
- US 2004162058 A1
- WO 2008045797 A2